# EUROPÄISCHE PATENTANMELDUNG

(11) **EP 2 127 721 A1**
(43) Veröffentlichungstag der Anmeldung: **02.12.2009**
(21) Anmeldenummer: 09006682.0
(22) Anmeldetag: 18.05.2009
(51) Int. Cl.: B01D 46/00, B01D 53/34, B01D 53/94, B01J 35/04, C22C 21/00, F01N 3/021

(54) **Metallischer Träger für Katalysatoren oder Partikelabscheider und Verwendung dieses Trägers**

(30) Priorität: 29.05.2008 DE 102008025761
(71) Anmelder: Oberland Mangold GmbH, 82438 Eschenlohe (DE)
(72) Erfinder: Mangold, Matthias, 82438 Eschenlohe (DE)
(74) Vertreter: Lang, Friedrich

(57) **Zusammenfassung**

Die Erfindung betrifft einen metallischen Träger für einen Katalysator oder Partikelabscheider und die Verwendung eines metallischen Trägers zur Abgasreinigung von Verbrennungskraftmaschinen, insbesondere Dieselmotoren. Dabei besteht der metallische Träger im Wesentlichen aus einer Aluminiumlegierung mit einem Aluminiumgehalt von 75 bis 100 Massenprozent. Mit Hilfe des erfindungsgemäßen metallischen Trägers wird eine vorteilhafte Reduktion von Trägermasse und Wärmekapazität erzielt, wodurch die Anspringtemperatur ("Light-Off") schneller erreicht wird. Die Reduktion von Masse und Wärmekapazität geht nicht zu Lasten einer Verringerung der katalytischen Trägeroberfläche.

## Beschreibung

Die Erfindung betrifft einen metallischen Träger für einen Katalysator oder Partikelabscheider und die Verwendung eines metallischen Trägers zur Abgasreinigung von Verbrennungskraftmaschinen.

Es sind Katalysatoren oder Partikelabscheider zur Verminderung der Abgaskomponenten CO, HC, NOx und Partikel bekannt, die metallische Träger aus Edelstahl mit meist axial verlaufenden Kanälen aufweisen. Solche Träger werden bekanntlich aus einer oder mehreren Lagen dünner, zumindest teilweise geprägter Metallfolien mit einer Folienstärke von beispielsweise 0,05 mm spiral- oder S-förmig zu einem Kreiszylinder gewickelt oder gewunden und in einen Trägermantel, der ebenfalls aus Edelstahl besteht, eingefügt und gegebenenfalls verlötet. Die metallischen Träger werden mit einem Washcoat beschichtet, welcher zum einen zur Oberflächenvergrößerung und zum anderen zur Aufnahme von Edelmetallkomponenten dient.

Innermotorische Maßnahmen, wie z. B. Optimierung der Verbrennungsparameter, gekühlte Abgasrückführung etc., führen zu einer Absenkung der Abgastemperaturen von Dieselmotoren, die ohnehin prozessbedingt niedrigere Abgastemperaturen aufweisen als Ottomotoren. Vor allem bei Teillast, wie z. B. Stadtverkehr, oder in Bereichen des Abgasstrangs, die vom Motor entfernt liegen, werden durch die thermische Trägheit der Komponenten im Abgasstrang, wie z. B. Katalysatoren, nicht ausreichend schnell die Betriebstemperaturen erreicht, die zu einer effektiven, katalytischen Reaktion der zu reduzierenden Schadstoffe unbedingt erforderlich sind. Dies führt vor allem bei Kaltstarts und dynamischen Lastsprüngen zu Schwierigkeiten bezüglich der Konvertierung der Schadstoffe.

Daher zielen die Forschung und Entwicklung moderner, metallischer Träger hauptsächlich auf eine Reduzierung der Wärmekapazität des Trägers ab, so dass die so genannte "Light-Off"-Temperatur des Katalysators noch schneller erreicht wird.

Aus der Druckschrift US 5,599,509 A ist ein Metallträger bekannt, der Perforierungen aufweist. Mit Hilfe dieser Perforierungen wird die Wärmekapazität herabgesetzt, um die "Light-Off"-Temperatur schneller zu erreichen. Nachteilig ist hierbei der Verlust der katalytischen Oberfläche durch die Perforierungen.

Aus DE 3510715 A1 ist ein Träger bekannt, der aus Streckmetall besteht. Auch hier ist die Reduzierung der Wärmekapazität, also das schnellere Erreichen der "Light-Off"-Temperatur, mit dem Verlust der reaktiven Trägeroberfläche verbunden.

Daher ist es die **Aufgabe** der vorliegenden Erfindung, einen metallischen Träger anzugeben, mit dessen Hilfe die "Light-Off"-Temperatur noch schneller erreicht wird, wobei der Verlust der Trägeroberfläche minimiert wird.

Diese Aufgabe wird für einen metallischen Träger gelöst mit den Merkmalen aus dem Anspruch 1. Bevorzugte Weiterbildungen sind in den abhängigen Ansprüchen angegeben. Die Verwendung des erfindungsgemäßen metallischen Trägers ist der Gegenstand des Anspruchs 16.

Der erfindungsgemäße metallische Träger besteht im Wesentlichen aus einer Aluminiumlegierung und weist einen Aluminiumgehalt von 75 bis 100 Massenprozent, insbesondere zwischen 80 und 99,8 Massenprozent, auf.

Tabelle 1 veranschaulicht die Vorteile des erfindungsgemäßen Trägers im Vergleich zu Trägern aus dem Stand der Technik.

Zu Vergleichzwecken werden insgesamt 3 verschiedene metallische Träger aus dem Stand der Technik einer besonderen Ausführungsvariante des erfindungsgemäßen Träger mit einem Aluminiumgehalt von 99,5 Massenprozent gegenübergestellt. Der "Standard"-Träger ist ein Edelstahlträger ohne Perforierungen; der Träger mit "Löchern" weist regelmäßig um 60° versetzte Bohrungen mit einem Durchmesser von 8 mm und einer Teilung von 11 mm in beiden Folien auf; und der Streckmetall-Träger besitzt regelmäßig verteilte Maschen mit einer Maschengröße von 0,5 x 0,6 mm und einer Stegbreite von 0,18 mm. Alle Träger aus Edelstahl (1.4767) haben auch einen Trägermantel aus Edelstahl. Eigenschaften bzgl. der Trägergeometrie sind in den Zeilen a bis f der Tabelle 1 angegeben und stimmen bei allen vier Trägern zu Vergleichzwecken natürlich überein.

**Tabelle 1: Vergleich verschiedener Träger**

| | | | **"Standard"-Träger** | **Träger mit "Löchern"** | **Streckmetall-Träger** | **Träger gemäß Erfindung** |
|---|---|---|---|---|---|---|
| | **Trägerdaten** | | | | | |
| a | Durchmesser des Trägers | [mm] | 150 | | | |
| b | Länge des Trägers | [mm] | 150 | | | |
| c | Außendurchmesser des Trägermantels (mit s=1,5mm) | [mm] | 153 | | | |
| d | Länge des Trägermantels | [mm] | 160 | | | |
| e | Dicke der Folienlage | [mm] | 0,05 | | | |
| f | Zelldichte | [cpsi] | 400 | | | |

| | **Materialdaten** | | | | | |
|---|---|---|---|---|---|---|
| g | Material | | Edelstahl 1.4767 | Edelstahl 1.4767 | Edelstahl | Aluminium 99,5 |
| h | Dichte des Materials | [kg/m^3] | 7200 | 7200 | 7200 | 2700 |
| i | Wärmeleitfähigkeit | [W/(m*K)] | 13 | 13 | 13 | 221 |
| j | Spezifische Wärmekapazität | U/(kg*K)] | 490 | 490 | 490 | 900 |

| | **Massen** | | | | | |
|---|---|---|---|---|---|---|
| k | Masse des Trägers | [kg] | 2,05 | 1,27 | 1,53 | 0,76 |
| I | Masse des Trägermantels | [kg] | 0,90 | 0,90 | 0,90 | 0,31 |
| m | Gesamtmasse (Träger + Trägermantel) | [kg] | 2,95 | 2,17 | 2,43 | 1,07 |
| n | Reduktion Gesamtmasse gegenüber "Standard"-Gesamtmasse | [%] | | 26,44 | 17,63 | 63,73 |

| | **Oberflächen** | | | | | |
|---|---|---|---|---|---|---|
| o | Perforierte Oberfläche | m ^ 2 | 0 | 4,30 | 2,40 | 0 |
| p | Trägeroberfläche | m ^ 2 | 11,30 | 7,00 | 8,90 | 11,30 |
| q | Flächenverlust im Vergleich zum "Standard"-Träger | [%] | | 38,05 | 21,24 | 0 |

| | **Wärmekapazitäten** | | | | | |
|---|---|---|---|---|---|---|
| r | Wärmekapazität des Trägers+Trägermantels | [J/K] | 1445,50 | 1063,30 | 1190,70 | 963,00 |
| s | Reduktion der Wärmekapazität gegenüber dem "Standard"-Träger | [%] | | 26,44 | 17,63 | 33,38 |

Materialspezifische Eigenschaften sind in den Zeilen g bis j angegeben. Bei der Dichte des Materials wird der große Vorteil Aluminiums gegenüber Edelstahl besonders deutlich. Die Dichte des Aluminiums beträgt circa nur ein Drittel der Dichte des Edelstahls mit der Werkstoffnummer 1.4767, der bei den meisten Trägeranwendungen für die Träger-Zellstruktur zum Einsatz kommt. Unterschiedliche Legierungsanteile bewirken selbstverständlich eine kleine Veränderung der Dichte und somit der Masse, allerdings sind die messbaren Veränderungen in der Dichte vernachlässigbar gering, solange die Hauptbestandteile der Legierungen, d. h. Aluminium bei der Aluminiumlegierung bzw. Eisen beim legierten Edelstahl, gleich bleiben.

Die Wärmeleitfähigkeit des Werkstoffs Aluminium ist um den Faktor 17 höher als die Wärmeleitfähigkeit des Edelstahls 1.4767 (Zeile i, Tabelle 1). Dies führt dazu, dass die Gefahr der Bildung von so genannten "Hot Spots", d. h. Stellen lokaler Überhitzungen, beim erfindungsgemäßen Träger deutlich geringer ist als bei herkömmlichen Edelstahlträgern. Geringe Wärmeleitfähigkeit, d. h. schlechte Wärmeleitung innerhalb des Materials, kann zu Materialschäden infolge lokaler Überhitzung führen und verlängert zudem die Aufheizdauer des Trägers, was insbesondere bei Kaltstarts oder dynamischen Lastwechsel, die für zukünftige Emissionszertifizierungen in Fahrzyklen immer mehr an Bedeutung gewinnen werden, nachteilig ist.

Die spezifische Wärmekapazität ist eine Materialeigenschaft, die bei Aluminium im Vergleich zu Edelstahl 1.4767, wie in Zeile j der Tabelle 1 erkennbar, circa um den Faktor 1,8 größer ist als bei Edelstahl 1.4767. Bei der Ermittlung der Wärmekapazität von Träger und Trägermantel allerdings werden die Massen des Trägers und des Trägermantels berücksichtigt. Daraus folgt, dass der erfindungsgemäße metallische Träger mit dem Trägermantel trotz der höheren spezifischen Wärmekapazität des Aluminiums eine deutlich geringere Wärmekapazität im Vergleich zum "Standard"-Träger aufweist, da die deutlich geringere Masse des erfindungsgemäßen Trägers mit dem Trägermantel die höhere spezifische Wärmekapazität des Aluminiums mehr als nur "kompensiert". Die Wärmekapazität des verglichenen erfindungsgemäßen Aluminium-Trägers, der keine Perforierungen aufweist, liegt sogar unter denen der perforierten Träger (Zeile r, Tabelle 1).

Zusammenfassend lässt sich festhalten, dass der erfindungsgemäße metallische Träger deutliche Vorteile gegenüber den verglichenen Trägern aus dem Stand der Technik hinsichtlich der Reduktion der Masse (Zeile n, Tabelle 1), und der Verminderung der Wärmekapazität (Zeile s, Tabelle 1) bietet, ohne die katalytische Trägeroberfläche zu verringern (Zeile q, Tabelle 1).

Darüber hinaus zeichnet sich der erfindungsgemäße metallische Träger durch eine hervorragende Korrosionsbeständigkeit aus. Es ist bekannt, dass Aluminium in sauerstoffreicher Umgebung eine Oxidschicht aus Al₂O₃ auf der Oberfläche bildet, wodurch der erfindungsgemäße Träger eine extreme Beständigkeit gegenüber Korrosion erlangt. Diese Al₂O₃-Schicht, die auch in herkömmlichen metallischen Trägern mit Aluminium als Legierungselement gebildet wird, wobei dort der Aluminiumgehalt mit bis zu ca. 8 Massenprozent relativ gering ist, wächst während des Betriebes ständig unter Ausnutzung des Legierungselements Aluminium. Nach langer Betriebszeit führt dieser Wachstumsprozess durch das Ausdiffundieren des Aluminiums zur Aluminiumverarmung im Träger und somit zur Zerstörung des Trägers durch die so genannte "Breakaway"-Korrosion. Da der erfindungsgemäße metallische Träger Aluminium als Hauptbestandteil mit einem Gehalt von 75 bis 100 Massenprozent umfasst, ist ein sicherer Korrosionsschutz durch die schützende Al₂O₃-Schicht stets gewährleistet. Darüber hinaus führt die bessere Al₂O₃-Schicht beim erfindungsgemäßen metallischen Träger zu einer besseren Anhaftung des Washcoats.

Ein weiterer Vorteil des erfindungsgemäßen Trägers gegenüber den perforierten Trägern - zusätzlich zur Reduktion der Masse und der Wärmekapazität und zusätzlich zur Erhöhung der katalytischen Oberfläche - besteht darin, dass auch Herstellungskosten eingespart werden, da der zusätzliche Aufwand bei der Herstellung aufgrund von Perforierungen mittels Bohren oder Strecken entfällt.

Aluminiumlegierungen eignen sich hervorragend zum Walzen, so dass extrem dünne Folienstärken auch unter 0,05 mm, beispielsweise 0,03 mm oder gar 0,01 mm, erreicht werden können. Ferner lassen sich Aluminiumlegierungen ausgezeichnet umformen und bearbeiten, so dass der erfindungsgemäße Träger in einer besonderen Ausführung auf bekannter Weise perforiert werden kann, um Masse und Wärmekapazität noch weiter abzusenken und ferner gemäß einer weiteren Ausführung auch mit bekannten Umlenkelementen versehen werden kann, um die Verweildauer und den Oberflächenkontakt der Abgaskomponenten im Katalysator oder Partikelabscheider zu erhöhen.

Absolut "reines" Aluminium mit einem Aluminiumgehalt von 100 % ist technisch nicht erhältlich, da immer gewisse Anteile von Verunreinigungen bzw. Beimengungen, beispielsweise Eisen oder Silicium, vorhanden sind, deren Gehalt sich von Charge zu Charge unterscheiden können. Aus diesem Grund wird üblicherweise unter reinem Aluminium mit einem Aluminiumgehalt von 100 Massenprozent Aluminium mit einem Aluminiumgehalt von beispielsweise 99,5 bis 99,9 Massenprozent, je nach technischer Möglichkeit, verstanden. Dementsprechend weist ein erfindungsgemäßer Träger, dessen Aluminiumgehalt bei einer Ausführungsform der Erfindung 100 Massenprozent beträgt, in der Praxis einen Aluminiumgehalt von 99,5 bis 99,9 Massenprozent auf.

In einer bevorzugten Weiterbildung umfasst der erfindungsgemäße Träger ein oder mehrere Legierungselemente aus einer Gruppe, die aus Titan (Ti), Eisen (Fe), Silicium (Si), Nickel (Ni), Magnesium (Mg), Mangan (Mn), Chrom (Cr), Kupfer (Cu) und Zink (Zn) besteht. Dabei beträgt der Gehalt aller Legierungselemente im metallischen Träger zwischen 0,4 und 25 Massenprozent, vorzugsweise zwischen 0,5 und 25 Massenprozent, insbesondere bevorzugt zwischen 0,5 und 16 Massenprozent. Durch gezieltes Hinzufügen der Legierungselemente werden Eigenschaften wie z. B. Festigkeit, Härte, Korrosionsbeständigkeit, Verarbeitbarkeit etc. positiv beeinflusst.

In einer bevorzugten Weiterbildung weist der erfindungsgemäße Träger einen Titangehalt zwischen 0,4 und 25 Massenprozent, vorzugsweise zwischen 0,5 und 8 Massenprozent auf.

In einer vorteilhaften Ausführung weist der metallische Träger einen Magnesiumgehalt zwischen 0 und 6 Massenprozent, insbesondere zwischen 0 und 3 Massenprozent, auf. Magnesium führt zu einer Erhöhung der Festigkeit der Aluminiumlegierung.

Gemäß einer vorteilhaften Ausführung weist der metallische Träger einen Siliciumgehalt zwischen 0 und 10 Massenprozent, besonders bevorzugt zwischen 0 und 3 Massenprozent, auf.

In einer vorteilhaften Ausführung weist der metallische Träger einen Chromgehalt zwischen 0 und 23 Massenprozent, insbesondere zwischen 0 und 5 Massenprozent, auf.

In einer weiteren vorteilhaften Ausführung weist der metallische Träger einen Nickelgehalt zwischen 0,5 und 25 Massenprozent, vorzugsweise zwischen 0,5 und 8 Massenprozent, auf.

In einer weiteren bevorzugten Ausführung weist der erfindungsgemäße Träger einen Trägermantel auf, der ebenfalls aus einer Aluminiumlegierung mit einem Aluminiumgehalt von 75 bis 100 Massenprozent besteht. Vorzugsweise besteht der Trägermantel aus der gleichen Aluminiumlegierung mit den gleichen Gehalten an Legierungselementen wie der Träger selbst. Hierdurch lässt sich eine noch höhere Massenreduktion erzielen, was vor allem bei großvolumigen Katalysator- oder Partikelabscheidern z. B. für Nutzfahrzeuge besonders vorteilhaft ist. Im Hinblick auf die immer strenger werdende Abgasgrenznorm auch für Kohlendioxide (CO₂), führt der durch die vorliegende Erfindung erzielte deutliche Massenreduktion zu einer vorteilhaften Absenkung von Verbrauch und somit zur Absenkung von CO₂.

Gemäß einer bevorzugten Ausführung besteht der Trägermantel aus herkömmlichem Edelstahl. Hierdurch kann der Vorteil des schnellen Erreichens von "Light-Off" durch den erfindungsgemäßen Träger aus einer Aluminiumlegierung mit dem Vorteil der guten Wärmespeicherfähigkeit des Edelstahlmantels kombiniert werden.

In einer bevorzugten Ausführung weist der erfindungsgemäße metallische Träger eine zweite Ummantelung auf, die den Trägermantel umschließt. Die zweite Ummantelung ist beispielsweise aus Edelstahl und wird durch Klammern, Nieten, Löten oder Schweißen an den Trägermantel und an die Anschlussteile, die im Abgasstrang dem Trägermantel bzw. der zweiten Ummantelung benachbart sind, gefügt. Hierbei ist es vorteilhaft, eine Zwischenschicht aus Quell- oder Glasmatte zwischen dem Trägermantel und der zweite Ummantelung aus Edelstahl anzuordnen, um zum einen die unterschiedlichen Temperaturausdehnungen der Werkstoffe, nämlich Aluminiumlegierung und Edelstahl, auszugleichen und zum anderen die Wärme im Träger möglichst zu isolieren. Durch die zweite Ummantelung lassen sich auch Vorteile bezüglich Geräuschdämmung erzielen. Alternativ ist auch eine Luftspaltisolierung zwischen dem Trägermantel und der zweiten Ummantelung möglich, wobei der Trägermantel in wenigen Bereichen eine Verbindung mit der zweiten Ummantelung hat. Mit Hilfe der Luftspaltisolierung wird die Wärmedämmung verbessert, so dass weniger Wärme vom Katalysator an die Umgebung abgegeben wird.

Die Anschlussteile gemäß einer weiteren bevorzugten Ausführung sind unmittelbar neben dem erfindungsgemäßen Trägermantel bzw. neben der zweiten Ummantelung angeordnet und sind ebenfalls aus einer Aluminiumlegierung mit einem Aluminiumgehalt von 75 bis 100 Massenprozent. Sie sind fügetechnisch mittels Nieten, Löten oder Schweißen mit dem Trägermantel bzw. der zweiten Ummantelung verbunden und stellen die Verbindung zu der übrigen Abgasanlage her. Hierdurch lässt sich eine weitere Reduktion der Masse erreichen. Die Anschlussteile können aber natürlich auch aus Edelstahl bestehen.

Gemäß einer bevorzugten Ausführung werden sowohl der Trägermantel mit dem Träger als auch der Träger in sich mit Lot, vorzugsweise mit Aluminiumlot, insbesondere bevorzugt mit Aluminiumlot mit Flussmittel, verlötet. Dabei hat es sich als besonders vorteilhaft herausgestellt, Aluminiumlot bzw. -draht zu verwenden, die einen Siliciumgehalt von 1 bis 20 Massenprozent, insbesondere von 5 bis 15 Massenprozent, aufweisen. Dabei liegt die Verlötungstemperatur idealerweise in einem Bereich von 500 bis 720 °C.

In einer bevorzugten Weiterbildung weist der erfindungsgemäße Träger eine Folienstärke von 0,01 bis 0,2 mm, besonders bevorzugt eine Folienstärke von 0,03 bis 0,08 mm, auf. Mit Hilfe dieser dünnen, unterschiedlichen Folienstärken kann die Zelldichte des erfindungsgemäßen Trägers je nach Anwendung zwischen 100 und 1000 cpsi (cells per square inch) variiert werden. Mit abnehmender Folienstärke wird der Abgasgegendruck gesenkt.

Wie bereits erwähnt, werden metallische Träger aus mindestens einer oder vorzugsweise aus zwei übereinanderliegenden Folienlagen geformt, wobei die eine Folienlage glatt und die andere Folienlage geprägt ist, so dass nach dem Wickeln oder Winden gleichmäßige Strömungskanäle gebildet werden. Gemäß einer vorteilhaften Ausführung besteht dabei die eine glatte Folienlage aus einer Aluminiumlegierung mit einem Aluminiumgehalt zwischen 75 bis 100 Massenprozent und die andere geprägte Folienlage aus herkömmlichem Edelstahl. Denkbar ist auch eine umgekehrte Kombination mit einer glatten Lage aus Edelstahl und einer geprägten Lage aus einer Aluminiumlegierung mit einem Aluminiumgehalt zwischen 75 bis 100 Massenprozent. Hierdurch lassen sich die Vorteile des schnellen Erreichens von "Light-Off"-Temperatur durch Aluminium mit den Vorteilen der guten Wärmespeicherfähigkeit von Edelstahl zu einer Art Hybridkatalysator kombinieren. Damit können in gewissen Bereichen von Fahrzyklen, in denen den Katalysatoren oder Partikelabscheidern keine ausreichende Wärme vom Motor zugeführt werden, die vorhandene Wärme durch die Edelstahlfolienlage vorteilhaft gespeichert werden, so dass auch die Aluminiumfolienlage länger warmgehalten wird. Wenn der Motor wieder in Lastbetrieb geht, kommt dann wieder der Vorteil des schnelleren Aufheizens der Aluminiumfolienlage zum Tragen, so dass die "Light-Off"-Temperatur wieder schneller erreicht wird.

Gemäß einer weiteren vorteilhaften Ausführung kann der erfindungsgemäße Träger aus Hybrid-Folienlagen bestehen, die nach dem Wickeln, ausgehend von der Mittelachse des Trägers, einen radial inneren Bereich aus einer Aluminiumlegierung mit einem Aluminiumgehalt von 75 bis 100 Massenprozent und einen radial äußeren Bereich aus Edelstahl aufweisen. Auch eine umgekehrte Anordnung ist denkbar und vorteilhaft, nämlich ein radial innerer Bereich aus Edelstahl und ein radial äußerer Bereich aus einer Aluminiumlegierung mit einem Aluminiumgehalt von 75 bis 100 Massenprozent. Hierdurch lassen sich die besagten Vorteile von Aluminiumlegierung mit den Vorteilen von Edelstahl kombinieren.

In einer vorteilhaften Ausführung der Erfindung weisen die erste und/oder zweite Folienlage des metallischen Trägers Löcher auf, deren Durchmesser zwischen 0,1 und 8,0 mm betragen, wobei der freie Querschnitt der Lochung zwischen 25 und 50 % liegt. Hierdurch wird eine weitere Gewichtsreduktion erzielt, welche für ein noch schnelleres Erreichen der "Light-Off"-Temperatur sorgt.

Vorzugsweise weisen die erste und/oder zweite Folienlage des erfindungsgemäßen Trägers eine Mikrostruktur zur Verwirbelung des laminaren Gasflusses in den einzelnen Zellen auf. Durch die Verwirbelung bzw. Turbulenz des Abgasstroms wird die Umsatzrate des Katalysators und die Abscheidung von Rußpartikeln erhöht.

Vorzugsweise wird der erfindungsgemäße Träger als Träger für Katalysatoren oder Partikelabscheider verwendet. Besonders gut geeignet ist der erfindungsgemäße metallische Träger zur Verwendung als Träger für einen Vor-, Oxidations-, Hydrolyse-, SCR-, oder Ammoniaksperr-Katalysator. Genauso gut lässt sich der erfindungsgemäße Träger für einen Partikelabscheider verwenden. Moderne Dieselmotoren, aber auch Dieselmotoren, die heute bereits im Einsatz sind, weisen in weitesten Bereichen des Abgasstrangs, vor allem im Unterbodenbereich, Abgastemperaturen auf, die weit unter der Schmelztemperatur des reinen Aluminiums von 660 °C liegen. Die ohnehin im Vergleich zu Ottomotoren niedrigere Abgastemperaturen werden durch Maßnahmen wie z. B. gekühlte Abgasrückführung etc. noch weiter gesenkt, so dass das Augenmerk nicht auf die Erhöhung der Temperaturbeständigkeit des metallischen Trägers, sondern vielmehr auf das schnelle Erreichen der "Light-Off"-Temperaur gerichtet ist. Mit Hilfe des erfindungsgemäßen metallischen Trägers gelingt es auf überzeugender Weise, die schädlichen Abgaskomponenten effektiv zu mindern, ohne dass das Trägermaterial beschädigt werden würde. Bevorzugte Betriebstemperaturen des erfindungsgemäßen metallischen Trägers liegen in einem Bereich von 150 bis 600 °C. Damit ist der erfindungsgemäße metallische Träger nicht nur für Applikationen in Neufahrzeugen sondern auch für Nachrüstungen bestehender Abgasnachbehandlungssysteme sowohl für Diesel- als auch für Ottomotoren bestens geeignet.

## Patentansprüche

1. Metallischer Träger für einen Katalysator oder Partikelabscheider zur Abgasreinigung einer Verbrennungskraftmaschine,
**dadurch gekennzeichnet,**
**dass** der metallische Träger im Wesentlichen aus einer Aluminiumlegierung besteht und einen Aluminiumgehalt von 75 bis 100 Massenprozent aufweist.

2. Metallischer Träger nach Anspruch 1,
**dadurch gekennzeichnet,**
**dass** der metallische Träger mindestens ein Legierungselement aus einer Gruppe umfasst, die aus den Elementen Ti, Fe, Si, Ni, Mg, Mn, Cr, Cu und Zn besteht, wobei der Gehalt der Legierungselemente im metallischen Träger zwischen 0,4 und 25 Massenprozent, vorzugsweise zwischen 0,5 und 25 Massenprozent, insbesondere bevorzugt zwischen 0,5 und 16 Massenprozent, liegt.

3. Metallischer Träger nach einem der vorhergehenden Ansprüche,
**dadurch gekennzeichnet,**
**dass** der metallische Träger einen Titangehalt zwischen 0,4 und 25 Massenprozent, vorzugsweise zwischen 0,5 und 8 Massenprozent, aufweist.

4. Metallischer Träger nach einem der vorhergehenden Ansprüche,
**dadurch gekennzeichnet,**
**dass** der metallische Träger einen Magnesiumgehalt zwischen 0 und 6 Massenprozent aufweist.

5. Metallischer Träger nach einem der vorhergehenden Ansprüche,
**dadurch gekennzeichnet,**
**dass** der metallische Träger einen Chromgehalt zwischen 0 und 23 Massenprozent aufweist.

6. Metallischer Träger nach einem der vorhergehenden Ansprüche,
**dadurch gekennzeichnet,**
**dass** der metallische Träger einen Nickelgehalt zwischen 0,5 und 25 Massenprozent, vorzugsweise zwischen 0,5 und 8 Massenprozent, aufweist.

7. Metallischer Träger nach einem der vorhergehenden Ansprüche,
**dadurch gekennzeichnet,**
**dass** der metallische Träger einen Trägermantel aufweist, wobei der Trägermantel aus Edelstahl oder im wesentlichen aus der gleichen Aluminiumlegierung besteht wie der Träger selbst.

8. Metallischer Träger nach einem der vorhergehenden Ansprüche,
**dadurch gekennzeichnet,**
**dass** eine zweite Ummantelung um den Trägermantel angeordnet ist, wobei zwischen dem Trägermantel und der zweiten Ummantelung eine Zwischenschicht aus Quell- oder Glasmatte angeordnet ist.

9. Metallischer Träger nach einem der vorhergehenden Ansprüche,
**dadurch gekennzeichnet,**
**dass** der metallische Träger Anschlussteile für den Einbau in den Abgasstrang aufweist, wobei die Anschlussteile aus einer Aluminiumlegierung mit einem Aluminiumgehalt von 75 bis 100 Massenprozent bestehen.

10. Metallischer Träger nach einem der vorhergehenden Ansprüche,
**dadurch gekennzeichnet,**
**dass** der metallische Träger mindestens eine, vorzugsweise zwei übereinander liegende, gewickelte Folienlagen mit einer Dicke von 0,01 bis 0,2 mm aufweist, wobei eine erste Folienlage glatt und eine zweite Folienlage geprägt ist.

11. Metallischer Träger nach Anspruch 10,
**dadurch gekennzeichnet,**
**dass** die erste und/oder die zweite Folienlage Löcher aufweisen, deren Durchmesser zwischen 0,1 und 8,0 mm betragen, wobei der freie Querschnitt der Lochung zwischen 25 und 50 % liegt.

12. Metallischer Träger nach Anspruch 10 oder 11,
**dadurch gekennzeichnet,**
**dass** die erste und/oder die zweite Folienlage eine Mikrostruktur zur Verwirbelung des laminaren Gasflusses aufweisen.

13. Metallischer Träger nach einem der Ansprüche 10 bis 12,
**dadurch gekennzeichnet,**
**dass** die erste Folienlage aus einer Aluminiumlegierung mit einem Aluminiumgehalt von 75 bis 100 Massenprozent und die zweite Folienlage aus Edelstahl besteht oder umgekehrt.

14. Metallischer Träger nach einem der vorhergehenden Ansprüche,
**dadurch gekennzeichnet,**
**dass** ein Lot, vorzugsweise ein Aluminiumlot, besonders bevorzugt ein Aluminiumlot mit einem Flussmittel, zum Verlöten des Trägers in sich und/oder zum Verlöten des Trägers mit dem Trägermantel einen Si-Gehalt von 1 bis 20 Massenprozent aufweist.

15. Metallischer Träger nach einem der vorhergehenden Ansprüche,
**dadurch gekennzeichnet,**
**dass** das Aluminiumlot beim Verlöten des Trägers in sich und/oder beim Verlöten des Trägers mit dem Trägermantel eine Verlötungstemperatur von 500 bis 720 °C aufweist.

16. Verwendung eines metallischen Trägers nach einem der vorhergehenden Ansprüche,
**dadurch gekennzeichnet,**
**dass** der metallische Träger als Träger für einen Vor-, Oxidations-, Hydrolyse-, SCR-, Sperrkatalysator oder für einen Partikelabscheider verwendet wird, wobei die auftretenden Betriebstemperaturen in einem Bereich von 150 bis 600 °C liegen.
